# FASCICULE DE BREVET EUROPEEN

(11) **EP 1 415 830 B1**
(45) Date de publication et mention de la délivrance du brevet: **10.08.2005**
(21) Numéro de dépôt: 03292714.7
(22) Date de dépôt: 30.10.2003
(51) Int. Cl.: B60H 1/34, F24F 13/065

(54) **Diffuseur d'air compact**
Kompakter Luftausströmer
Compact air diffuser

(30) Priorité: 31.10.2002 FR 0213730
(43) Date de publication de la demande: 06.05.2004
(73) Titulaire: Renault s.a.s., 92100 Boulogne Billancourt (FR)
(72) Inventeur: Deschuyteneer, Anne, 78180 Montigny Le Bretonneux (FR); Petit, Gérard, 78290 Croissy Sur Seine (FR)

(56) Documents cités:
- EP-A- 0 412 063
- EP-A- 0 479 734
- EP-A- 0 744 308
- DE-A- 3 908 612
- DE-A- 19 739 652
- FR-A- 2 746 717

## Description

La présente invention concerne un diffuseur d'air suffisamment compact pour pouvoir être utilisé dans un environnement étroit.

L'invention trouve une application particulièrement avantageuse mais non exclusive, dans le domaine des habitacles de véhicules automobiles. Le document EP 0 744 308 A divulgue un tel diffuseur d'air.

Les diffuseurs d'air connus, notamment dans le domaine automobile, nécessitent un volume important pour leur implantation car il est nécessaire de loger l'ensemble de leurs composants mécaniques.

En effet, outre un corps creux doté d'au moins une ouverture d'admission pour un flux d'air forcé et d'au moins une ouverture de sortie pour la diffusion de l'air dans l'habitacle, un diffuseur d'air typique de l'état de la technique comporte généralement des moyens d'obturation et/ou des moyens déflecteurs aptes respectivement à interrompre et à orienter le flux d'air sortant de chaque ouverture de sortie.

Or, de manière habituelle, ces éléments sont montés à l'extérieur du corps creux afin de ne pas modifier les dimensions internes de celui-ci et ainsi préserver les caractéristiques fonctionnelles et les performances du diffuseur d'air.

Un tel montage externe des différents composants mécaniques, des moyens d'obturation et/ou des moyens déflecteurs entraîne une augmentation sensible du volume extérieur du diffuseur d'air, ce qui constitue un inconvénient majeur lorsqu'il est nécessaire de l'implanter dans un environnement étroit.

Le but de la présente invention est de remédier à ces différents inconvénients et concerne à cet effet un diffuseur d'air notamment pour un habitacle de véhicule automobile, comportant un corps creux doté d'au moins une ouverture d'admission pour un flux d'air forcé et d'au moins une ouverture de sortie pour la diffusion de l'air dans l'habitacle, ainsi que des moyens d'obturation aptes à interrompre le flux d'air sortant de chaque ouverture de sortie, caractérisé en ce que les moyens d'obturation comportent au moins un volet obturateur monté mobile en déplacement entre une position déployée dans laquelle il obture chaque ouverture de sortie et une position repliée dans laquelle il libère chaque ouverture de sortie, et en ce que chaque volet obturateur présente une structure souple formant rideau qui est apte à épouser le contour du corps creux.

On entend par structure souple, toute structure suffisamment flexible pour pouvoir être courbée ou déformée, localement et/ou sur toute sa surface, sans risque de détérioration de rupture.

Cette souplesse structurelle peut être obtenue à partir d'un élément unique dont la nature est intrinsèquement flexible, ou à partir d'un élément composite formé de divers constituants dont l'association confère une certaine souplesse à l'ensemble, indépendamment de la flexibilité propre de chaque constituant.

Le but est de permettre au volet obturateur de s'adapter au mieux à la forme du corps creux, notamment au cours de ces déplacements, afin de limiter au maximum le volume supplémentaire nécessaire à l'intégration des moyens d'obturation audit corps creux.

L'invention telle qu'ainsi définie présente l'avantage de proposer un encombrement sensiblement réduit par rapport au diffuseur d'air de l'art antérieur.

En effet, les moyens d'obturation n'empiètent pas outre mesure sur l'espace environnant du diffuseur d'air puisqu'ils sont intégrés à la structure même du corps creux, sans pour autant que cela ait un impact sur le volume intérieur dudit corps creux.

Ainsi donc, le diffuseur d'air selon l'invention peut conserver des dimensions extérieures sensiblement égales à celles du corps creux, tout en préservant le volume intérieur de ce dernier.

Il est ainsi en mesure de pouvoir être utilisé très facilement dans des environnements étroits.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 est une vue éclatée et en perspective d'un diffuseur conforme à l'invention.
La figure 2 constitue une vue en coupe transversale représentant le diffuseur d'air de la figure 1 en position diffusion.
La figure 3 représente en coupe transversale le diffuseur d'air de la figure 1 en position spot.
La figure 4 est une coupe transversale illustrant le diffuseur d'air de la figure 1 en position fermée.

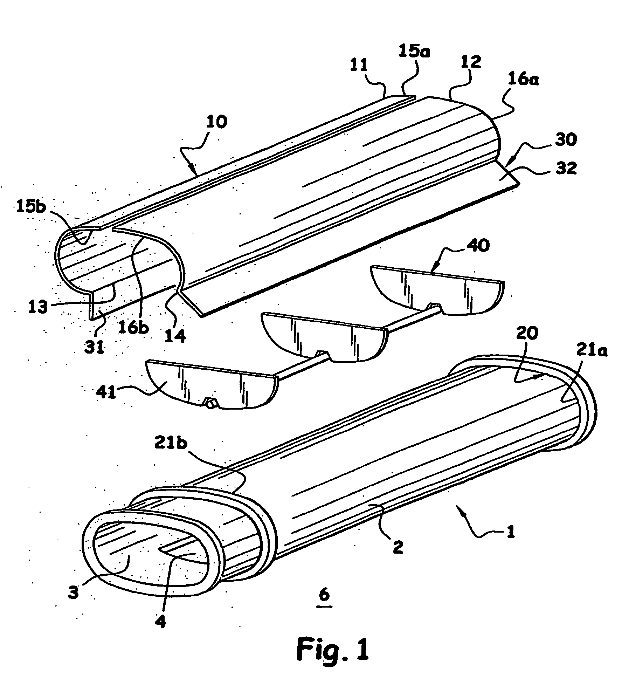

La figure 1 illustre un diffuseur d'air 1 destiné à être implanté dans un environnement étroit d'un habitacle de véhicule automobile.

Le diffuseur d'air 1 comporte un corps creux 2 qui est doté, d'une part d'une ouverture d'admission ovoïdale pour un flux d'air forcé et d'une ouverture de sortie 4 rectangulaire pour la diffusion de l'air dans l'habitacle 6, et d'autre part de moyens d'obturation 10 aptes à interrompre le flux d'air sortant de ladite ouverture de ladite ouverture de sortie 4.

Conformément à l'objet de la présente invention, les moyens d'obturation 10 comportent deux volets obturateurs 11, 12 montés mobiles en déplacement.

Chaque volet obturateur 11, 12 est en effet apte à être déplacé entre une position déployée dans laquelle il obture l'ouverture de sortie 4 et une position repliée dans laquelle il libère ladite ouverture de sortie 4, les extrémités libres 13, 14 respectives desdits volets obturateurs 11, 12 étant aptes à coopérer par contact jointif.

Par ailleurs, et d'une manière particulièrement avantageuse, chaque volet obturateur 11, 12 comporte une structure souple, formant rideau qui est apte à épouser le contour du corps creux 2.

Selon une particularité de l'invention, le diffuseur comporte des moyens de guidage 20 aptes à guider le déplacement de chaque volet obturateur 11, 12 suivant un parcours correspondant sensiblement au contour du corps creux 2.

Dans cet exemple de réalisation, les moyens de guidage 20 comportent deux rainures 21, 21a, 21b aptes à coopérer en coulissement avec les bords latéraux 15a, 16a ; 15b, 16b de chaque volet obturateur 11, 12.

Comme la section du corps creux est sensiblement ovoïdale, chaque rainure de guidage 21a, 21b décrit une piste de coulissement de forme également ovoïde, qui est en outre ménagée au plus près dudit corps creux 2.

Par ailleurs, les deux rainures de guidage 21a, 21b sont disposées en vis à vis parallèlement l'une de l'autre.

Selon un mode de réalisation avantageux, chaque volet obturateur 11, 12 est constitué par un élément en matière souple.

Mais selon une variante de réalisation de l'invention, chaque volet obturateur 11, 12 est constitué par au moins deux lamelles articulées longitudinalement entre elles, les extrémités de chaque lamelle étant aptes à coopérer en coulissement avec les rainures de guidage 21a, 21b.

Les lamelles peuvent être remplacées par des toiles armées.

Selon une caractéristique de l'invention, la structure de chaque volet obturateur 11, 12 est hermétique.

Selon une autre particularité de l'invention, le diffuseur d'air comporte des premiers moyens déflecteurs 30 aptes à focaliser le flux d'air sortant de chaque ouverture de sortie 4.

Dans cet exemple de réalisation, les premiers moyens déflecteurs 30 comportent deux lames déflectrices 31, 32 respectivement solidarisées à l'extrémité libre 13, 14 de chaque volet déflecteur 11, 12 suivant une direction sensiblement perpendiculaire.

Le flux d'air sortant de chaque ouverture de sortie 4 peut ainsi être concentré en rapprochant les extrémités libres 13, 14 des deux volets obturateurs 11, 12, les lames déflectrices 31, 32 canalisant alors l'écoulement de l'air suivant une direction donnée.

Mais selon une variante de réalisation, les premiers moyens déflecteurs 30 comportent deux lames déflectrices montées longitudinalement pivotantes, respectivement à l'extrémité libre 13, 14 de chaque volet déflecteur 11, 12.

Une telle configuration permet de focaliser encore d'avantage le flux d'air en jouant individuellement sur l'orientation de chaque lame déflectrice, et par conséquent d'améliorer de manière notable l'effet spot réalisé par les premiers moyens déflecteurs 30.

Selon une autre particularité de l'invention, le diffuseur d'air comporte des seconds moyens déflecteurs 40 aptes à capter au moins une partie du flux d'air traversant le corps creux 2 et à le répartir de manière sensiblement uniforme sur toute la section de passage de chaque ouverture de sortie 4.

Dans cet exemple de réalisation, les seconds moyens déflecteurs 40 sont constitués par au moins une aube déflectrice 41 positionnée à l'intérieur du corps creux 2, de manière sensiblement perpendiculaire à la direction d'écoulement du flux d'air et à proximité de chaque ouverture de sortie 4.

De préférence, la surface de chaque aube déflectrice 41 correspond sensiblement à la moitié de la section interne du corps creux 2.

Selon une autre particularité de l'invention, le corps creux 2 comporte au moins une ouverture d'évacuation apte à permettre la sortie du flux d'air vers un conduit de distribution, c'est à dire sans empreinter l'ouverture de sortie 4.

Cela signifie que le diffuseur d'air 1 selon l'invention, n'est pas nécessairement installé à l'extrémité d'un conduit de distribution d'air.

Il peut parfaitement être implanté au milieu dudit conduit sans rompre la continuité du flux d'air qui peut se prolonger ainsi vers un autre diffuseur d'air, par exemple.

De manière particulièrement avantageuse, la section du corps creux 2 est sensiblement identique à celle de chaque conduit de distribution d'air avec lequel ledit corps creux 2 communique.

Cette caractéristique montre bien qu'il est possible de conférer au diffuseur d'air 1 une compacité extrême lui permettant d'être utilisé dans des environnements particulièrement étroits.

Ainsi constitué, le diffuseur d'air 1, selon l'invention, est en mesure de prendre une infinité de positions d'utilisation qui correspondent aux diverses combinaisons de positions possibles de ses différents composants mobiles.

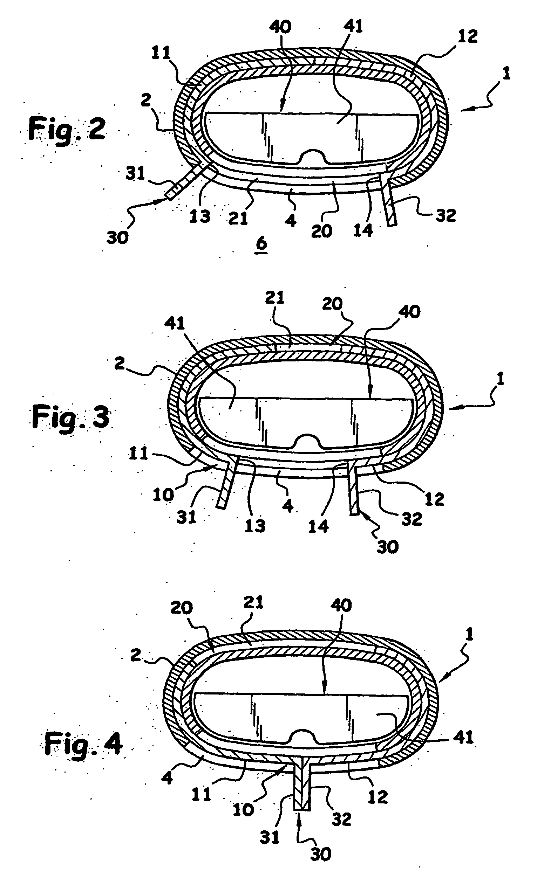

Parmi toutes les configurations envisageables, on distingue notamment la position de diffusion représentée à la figure 2.

Les volets déflecteurs 11, 12 sont ici complètement repliés, de sorte que la taille de l'ouverture de sortie 4 est maximale, ce qui engendre une diffusion 12 vers l'extérieur.

L'écoulement de l'air n'est, en effet, pas accéléré par une section de passage trop faible et les premiers moyens déflecteurs n'ont pas d'action prépondérante sur le flux d'air qui n'est, par conséquent, pas concentré en un point précis.

La position spot de la figure 3 se caractérise quant à elle par des volets déflecteurs 11, 12 partiellement déployés.

La section de passage du flux d'air au niveau de l'ouverture de sortie 4 est par conséquent notablement réduite. Les lames déflectrices 31, 32 sont alors disposées suivant des directions sensiblement parallèles, de sorte qu'elles sont en mesure de canaliser l'air dans une direction donnée.

Ainsi qu'on peut le voir sur la figure 4, les volets déflecteurs 11, 12 sont totalement déployés lorsque le diffuseur d'air 1 est en position fermé.

Les extrémités libres 13, 14 de ces volets déflecteurs 11, 12 coopèrent alors par contact jointif de manière à assurer une fermeture étanche.

Cette étanchéité est par ailleurs avantageusement complétée par la mise en contact des lames déflectrices 31, 32.

De manière particulièrement avantageuse, le diffuseur d'air 1 selon l'invention peut comporter des moyens moteurs aptes à assurer le déplacement des moyens d'obturation et/ou des moyens déflecteur et/ou des seconds moyens déflecteurs, c'est à dire d'au moins un de ces composants mobiles.

De préférence, ces moyens moteurs seront asservis au dispositif de climatisation du véhicule de transport dans lequel le diffuseur d'air est monté.

Dans la pratique, le diffuseur d'air 1, selon l'invention, est destiné à être implanté dans tout garnissage intérieur d'un véhicule de transport, notamment de type automobile.

Il peut ainsi être intégré, par exemple, dans un caisson de porte, dans un pied milieu ou dans un pavillon.

Le diffuseur d'air 1 peut, en outre, être mis en place à proximité d'une vitre d'un véhicule de transport, afin notamment de pouvoir remplir une fonction de désembuage.

Un autre avantage de la solution réside dans le fait que le diffuseur étant relativement long, il permet d'orienter l'épaisseur du flux d'air.

De plus, il permet de créer un rideau d'air, en fonction de l'endroit où il est implanté, ce qui permet de lutter efficacement contre les effets de paroi chaude ou froide, qui donne un sentiment de froid ou de chaud, le long des vitres, par exemple

## Revendications

1. Diffuseur d'air (1) notamment pour un habitacle de véhicule automobile, comportant un corps creux (2) doté d'au moins une ouverture d'admission (3) pour un flux d'air forcé et d'au moins une ouverture de sortie (4) pour la diffusion de l'air dans l'habitacle, ainsi que des moyens d'obturation (10) aptes à interrompre le flux d'air sortant de chaque ouverture de sortie (4), lesdits moyens d'obturation (10) comportant au moins un volet obturateur (11, 12) monté mobile en déplacement entre une position déployée dans laquelle il obture chaque ouverture de sortie (4) et une position repliée dans laquelle il libère chaque ouverture de sortie (4), **caractérisé en ce que** chaque volet obturateur (11, 12) présente une structure souple formant rideau qui apte est à épouser le contour du corps creux (2).

2. Diffuseur d'air (1) selon la revendication 1, **caractérisé en ce qu'**il comporte des moyens de guidage (20) aptes à guider le déplacement de chaque volet obturateur (11, 12) suivant un parcours correspondant sensiblement au contour du corps creux (2).

3. Diffuseur d'air (1) selon la revendication 2, **caractérisé en ce que** les moyens de guidage (20) comportent deux rainures (21a, 21b) aptes à coopérer en coulissement avec les bords latéraux (15a, 16a ; 15b, 16b) de chaque volet obturateur (11, 12).

4. Diffuseur d'air (1) selon l'une quelconque des revendications 1 à 3, **caractérisé en ce que** chaque volet obturateur (11, 12) est constitué par un élément en matière souple.

5. Diffuseur d'air (1) selon l'une quelconque des revendications 1 à 3, **caractérisé en ce que** chaque volet obturateur (11, 12) est constitué par au moins deux lamelles articulées longitudinalement entre elles, les extrémités de chaque lamelle étant aptes à coopérer en coulissement avec les rainures de guidage (21a, 21b).

6. Diffuseur d'air (1) selon l'une quelconque des revendications 1 à 5, **caractérisé en ce que** la structure de chaque volet obturateur (11, 12) est hermétique.

7. Diffuseur d'air (1) selon l'une quelconque des revendications 1 à 6, **caractérisé en ce que** les moyens d'obturation (10) comportent deux volets obturateurs (11, 12) mobiles dont les extrémités libres (13, 14) respectives sont aptes à coopérer par contact jointif.

8. Diffuseur d'air (1) selon l'une quelconque des revendications 1 à 7, **caractérisé en ce qu'**il comporte des premiers moyens déflecteurs (30) aptes à focaliser le flux d'air sortant de chaque ouverture de sortie (4).

9. Diffuseur d'air (1) selon la revendication 8, **caractérisé en ce que** les premiers moyens déflecteurs (30) comportent deux lames déflectrices (31, 32) respectivement solidarisées à l'extrémité libre (13, 14) de chaque volet déflecteur (11, 12) suivant une direction sensiblement perpendiculaire.

10. Diffuseur d'air (1) selon la revendication 8, **caractérisé en ce que** les premiers moyens déflecteurs (30) comportent deux lames déflectrices montées longitudinalement pivotantes, respectivement à l'extrémité libre (13, 14) de chaque volet déflecteur (11, 12).

11. Diffuseur d'air (1) selon l'une quelconque des revendications 1 à 10, **caractérisé en ce qu'**il comporte des seconds moyens déflecteurs (40) aptes à capter au moins une partie du flux d'air traversant le corps creux (2) et à le répartir de manière sensiblement uniforme sur toute la section de passage de chaque ouverture de sortie (4).

12. Diffuseur d'air (1) selon la revendication 11, **caractérisé en ce que** les seconds moyens déflecteurs (40) sont constitués par au moins une aube déflectrice (41) positionnée à l'intérieur du corps creux (2), de manière sensiblement perpendiculaire à la direction d'écoulement du flux d'air et à proximité de chaque ouverture de sortie (4).

13. Diffuseur d'air (1) selon la revendication 12, **caractérisé en ce que** la surface de chaque aube déflectrice (41) correspond sensiblement à la moitié de la section interne du corps creux (2).

14. Diffuseur d'air (1) selon l'une quelconque des revendications 1 à 13, **caractérisé en ce que** le corps creux (2) comporte au moins une ouverture d'évacuation apte à permettre la sortie du flux d'air vers un conduit de distribution.

15. Diffuseur d'air (1) selon l'une quelconque des revendications 1 à 14, **caractérisé en ce que** la section du corps creux (2) est sensiblement identique à celle de chaque conduit de distribution d'air avec lequel ledit corps creux (2) communique.

16. Diffuseur d'air (1) selon l'une quelconque des revendications 1 à 15, **caractérisé en ce qu'**il comporte des moyens moteurs aptes à assurer le déplacement d'au moins un de ses composants mobiles.

17. Diffuseur d'air (1) selon la revendication 16, **caractérisé en ce que** les moyens moteurs sont asservis au dispositif de climatisation du véhicule de transport dans lequel ledit diffuseur d'air (1) est monté.

18. Diffuseur d'air (1) selon l'une quelconque des revendications 1 à 17, **caractérisé en ce qu'**il est destiné à être implanté dans tout garnissage intérieur d'un véhicule de transport, notamment de type automobile.

19. Diffuseur d'air (1) selon l'une quelconque des revendications 1 à 18, **caractérisé en ce qu'**il est destiné à être implanté dans un caisson de porte d'un véhicule de transport notamment de type automobile.

20. Diffuseur d'air (1) selon l'une quelconque des revendications 1 à 18, **caractérisé en ce qu'**il est destiné à être implanté dans le pavillon d'un véhicule de transport notamment du type automobile.

21. Diffuseur d'air (1) selon l'une quelconque des revendications 1 à 18, **caractérisé en ce qu'**il est destiné à être implanté dans un pied milieu d'un véhicule de transport notamment de type automobile.

22. Diffuseur d'air (1) selon l'une quelconque des revendications 1 à 21, **caractérisé en ce qu'**il est destiné à être implanté à proximité d'une vitre d'un véhicule de transport notamment de type automobile.

## Patentansprüche

1. Luftausströmer (1), insbesondere für eine Fahrgastzelle eines Kraftfahrzeugs, aufweisend einen hohlen Körper (2), der mit mindestens einer Einlassöffnung (3) für einen forcierten Luftstrom und mindestes einer Auslassöffnung (4) für die Ausströmung von Luft in die Fahrgastzelle versehen ist sowie Verschlussmitteln (10), die fähig sind, den Luftstrom, welcher aus jeder Auslassöffnung (4) austritt, zu unterbrechen, wobei die Verschlussmittel (10) mindestens eine Verschlussklappe (11, 12) umfassen, die in Verschiebung zwischen einer ausgefahrenen Stellung, in welcher sie jede Auslassöffnung (4) verschließt, und einer umgeklappten Stellung, in welcher sie jede Auslassöffnung (4) freigibt, beweglich montiert ist, **dadurch gekennzeichnet, dass** jede Verschlussklappe (11 12) eine nachgiebige Struktur aufweist, welche einen Vorhang bildet, der fähig ist, sich der Kontur des hohlen Körpers (2) anzuschmiegen.

2. Luftausströmer (1) nach Anspruch 1, **dadurch gekennzeichnet, dass** der Führungsmittel (20) aufweist, die fähig sind, die Verstellung jeder Verschlussklappe (11, 12) gemäß einem Verlauf zu führen, welcher im Wesentlichen der Kontur des hohlen Körpers (2) entspricht.

3. Luftausströmer (1) nach Anspruch 2, **dadurch gekennzeichnet, dass** die Führungsmittel (20) zwei Nuten (21a, 21b) umfassen, die fähig sind, in Gleiten mit den seitlichen Rändern (15a, 16a; 15b, 16b) jeder Verschlussklappe (11, 12) zusammenszuwirken.

4. Luftausströmer (1) nach einem der Ansprüche 1 bis 3, **dadurch gekennzeichnet, dass** jede Verschlussklappe (11, 12) durch ein Element aus nachgiebigem Material gebildet ist.

5. Luftausströmer (1) nach irgendeinem der Ansprüche 1 bis 3, **dadurch gekennzeichnet, dass** jede Verschlussklappe (11, 12) aus mindestens zwei Lamellen gebildet ist, welche längs untereinander angelenkt sind, wobei die Enden jeder Lamelle fähig sind, in Gleiten mit den Führungsnuten (21a, 21b) zusammenzuwirken.

6. Luftausströmer (1) nach irgendeinem der Ansprüche 1 bis 5, **dadurch gekennzeichnet, dass** die Struktur jeder Verschlussklappe (11, 12) undurchlässig ist.

7. Luftausströmer (1) nach irgendeinem der Ansprüche 1 bis 6, **dadurch gekennzeichnet, dass** die Verschlussmittel (10) zwei bewegliche Verschlussklappen (11, 12) umfassen, deren freie Enden (13, 14) jeweils fähig sind, in einem aneinanderstoßenden Kontakt zusammenzuwirken.

8. Luftausströmer (1) nach irgendeinem der Ansprüche 1 bis 7, **dadurch gekennzeichnet, dass** er erste Ablenkmittel (30) umfasst, die fähig sind, den Luftstrom, welcher aus jeder Auslassöffnung (4) austritt, zu bündeln.

9. Lüftausströmer (1) nach Anspruch 8, **dadurch gekennzeichnet, dass** die ersten Ablenkmittel (30) zwei Ablenkblätter (31, 32) umfassen, welche jeweils mit dem freien Ende (13, 14) von jeder Ablenkklappe (11, 12) gemäß einer im Wesentlichen rechtwinkligen Richtung fest verbunden sind.

10. Luftausströmer (1) nach Anspruch 8, **dadurch gekennzeichnet, dass** die ersten Ablenkmittel (30) zwei Ablenkblätter umfassen, welche in Längsrichtung schwenkend jeweils an dem freien Ende (13, 14) jeder Ablenkklappe (11, 12) montiert sind.

11. Luftausströmer (1) nach irgendeinem der Ansprüche 1 bis 10, **dadurch gekennzeichnet, dass** er zweite Ablenkmittel (40) umfasst, welche fähig sind, mindestens einen Teil des Lunstroms, welcher den hohlen Körper (2) durchquert, aufzufangen und ihn auf im Wesentlichen gleichförmige Art und Weise über den gesamten Durchgangsquerschnitt jeder Auslassöffnung (4) aufzuteilen.

12. Luftausströmer (1) nach Anspruch 11, **dadurch gekennzeichnet, dass** die zweiten Ablenkmittel (40) durch mindestens eine Ablenkschaufel (41) gebildet sind, welche im Inneren des hohlen Körpers (2) auf im Wesentlichen rechtwinklige Art und Weise zur Strömungsrichtung des Luftstroms und in der Nähe jeder Auslassöffnung (4) angeordnet ist.

13. Luftausströmer (1) nach Anspruch 12, **dadurch gekennzeichnet, dass** die Oberfläche jeder Ablenkschaufel (41) im Wesentlichen der Hälfte des inneren Querschnitts des hohlen Körpers (2) entspaicht.

14. Lunausströmer (1) nach irgendeinem der Ansprüche 1 bis 13, **dadurch gekennzeichnet, dass** der hohle Körper (2) mindestens eine Ablassöffnung aufweist, die fähig ist, den Auslass des Luftstroms in Richtung zu einer Verteilungsleitung zu ermöglichen.

15. Luftausströmer (1) nach irgendeinem der Ansprüche 1 bis 14, **dadurch gekennzeichnet, dass** der Querschnitt des hohlen Körpers (2) im Wesentlichen identisch zu demjenigen jeder Luftverteilungsleitung ist, mit welcher der hohle Körper (2) in Verbindung steht.

16. Luftausströmer (1) nach irgendeinem der Ansprüche 1 bis 15, **dadurch gekennzeichnet, dass** er Motormittel umfasst, die fähig sind, die Verstellung mindestens eines seiner beweglichen Bestandteile sicherzustellen.

17. Luftausströmer (1) nach Anspruch 16, **dadurch gekennzeichnet, dass** die Motormittel in der Klimatisierungsvorrichtung des Transportfahrzeuges, in welchem der Luftausströmer (1) montiert ist, geregelt werden.

18. Luftausströmer (1) nach irgendeinem der Ansprüche 1 bis 17, **dadurch gekennzeichnet, dass** er dafür bestimmt ist, in jede innere Verkleidung eines Transportfahrzeugs, insbesondere vom automobilen Typ, eingesetzt zu werden.

19. Luftausströmer (1) nach irgendeinem der Ansprüche 1 bis 18, **dadurch gekennzeichnet, dass** er dafür bestimmt ist, in einem Türkasten eines Transportfahrzeugs, insbesondere vom automobilen Typ, eingesetzt zu werden.

20. Luftausströmer (1) nach irgendeinem der Ansprüche 1 bis 18, **dadurch gekennzeichnet, dass** er dafür bestimmt ist, in dem Dach eines Transportfahrzeuges, insbesondere vom automobilen Typ, eingesetzt zu werden.

21. Luftausströmer (1) nach irgendeinem der Ansprüche 1 bis 18, **dadurch gekennzeichnet, dass** er dafür bestimmt ist, in einer Mittelkonsole eines Transportfahrzeugs, insbesondere vom automobilen Typ, eingesetzt zu werden.

22. Luftausströmer (1) nach irgendeinem der Ansprüche 1 bis 21, **dadurch gekennzeichnet, dass** er dafür bestimmt ist, in der Nähe eines Fensters eines Transportfahrzeugs, insbesondere vom automobilen Typ, eingesetzt zu werden.

## Claims

1. An air diffuser (1), in particular for a motor vehicle passenger compartment, comprising a hollow body (2) provided with at least one intake opening (3) for a forced flow of air and at least one outlet opening (4) for the diffusion of air in the compartment, and closure means (10) capable of interrupting the flow of air issuing from each outlet opening (4), said closure means (10) comprising at least one closure flap (11, 12) mounted displaceably between a deployed position in which it closes each outlet opening (4) and a folded-back position in which it clears each outlet opening (4), **characterised in that** each closure flap (11) has a flexible structure forming a curtain which is capable of matching the contour of the hollow body (2).

2. An air diffuser (1) according to claim 1 **characterised in that** it comprises guide means (20) for guiding the displacement of each closure flap (11, 12) along a path substantially corresponding to the contour of the hollow body (2).

3. An air diffuser (1) according to claim 2 **characterised in that** the guide means (20) comprise two channels (21a, 21b) capable of co-operating in sliding relationship with the lateral edges (15a, 16a; 15b, 16b) of each closure flap (11, 12).

4. An air diffuser (1) according to any one of claims 1 to 3 **characterised in that** each closure flap (11, 12) is formed by an element of flexible material.

5. An air diffuser (1) according to any one of claims 1 to 3 **characterised in that** each closure flap (11, 12) is formed by at least two strips which are longitudinally pivotably connected together, the ends of each strip being capable of co-operating in sliding relationship with the guide channels (21a, 21b).

6. An air diffuser (1) according to any one of claims 1 to 5 **characterised in that** the structure of each closure flap (11, 12) is hermetic.

7. An air diffuser (1) according to any one of claims 1 to 6 **characterised in that** the closure means (10) comprise two movable closure flaps (11, 12), the respective free ends (13, 14) of which are capable of co-operating by contiguous contact.

8. An air diffuser (1) according to any one of claims 1 to 7 **characterised in that** it comprises first deflector means (30) capable of focusing the flow of air issuing from each outlet opening (4).

9. An air diffuser (1) according to claim 8 **characterised in that** the first deflector means (30) comprise two deflector blades (31, 32) which are respectively fixed with respect to the free end (13, 14) of each closure flap (11, 12) in a substantially perpendicular direction.

10. An air diffuser (1) according to claim 8 **characterised in that** the first deflector means (30) comprise two deflector blades mounted longitudinally pivotably respectively at the free end (13, 14) of each closure flap (11, 12).

11. An air diffuser (1) according to any one of claims 1 to 10 **characterised in that** it comprises second deflector means (40) capable of capturing at least a part of the flow of air passing through the hollow body (2) and distributing it substantially uniformly over the entire flow section of each outlet opening (4).

12. An air diffuser (1) according to claim 11 **characterised in that** the second deflector means (40) are formed by at least one deflector blade member (41) positioned in the interior of the hollow body (2) in substantially perpendicular relationship to the direction of movement of the flow of air and in the proximity of each outlet opening (4).

13. An air diffuser (1) according to claim 12 **characterised in that** the surface of each deflector blade member (41) substantially corresponds to half the internal section of the hollow body (2).

14. An air diffuser (1) according to any one of claims 1 to 13 **characterised in that** the hollow body (2) comprises at least one discharge opening capable of permitting the issue of the air flow towards a distribution conduit.

15. An air diffuser (1) according to any one of claims 1 to 14 **characterised in that** the section of the hollow body (2) is substantially identical to that of each air distribution conduit with which said hollow body (2) communicates.

16. An air diffuser (1) according to any one of claims 1 to 15 **characterised in that** it comprises motor means for producing displacement of at least one of its movable components.

17. An air diffuser (1) according to claim 16 **characterised in that** the motor means are controlled in dependence on the air conditioning unit of the transport vehicle in which said air diffuser (1) is mounted.

18. An air diffuser (1) according to any one of claims 1 to 17 **characterised in that** it is intended to be installed in any internal trim of a transport vehicle in particular of automotive type.

19. An air diffuser (1) according to any one of claims 1 to 18 **characterised in that** it is intended to be installed in a door box of a transport vehicle in particular of automotive type.

20. An air diffuser (1) according to any one of claims 1 to 18 **characterised in that** it is intended to be installed in the roof of a transport vehicle in particular of the automotive type.

21. An air diffuser (1) according to any one of claims 1 to 18 **characterised in that** it is intended to be installed in a foot well of a transport vehicle in particular of the automotive type.

22. An air diffuser (1) according to any one of claims 1 to 21 **characterised in that** it is intended to be installed in the proximity of a window of a transport vehicle in particular of automotive type.
